# EUROPEAN PATENT APPLICATION

(11) **EP 1 120 336 A2**
(43) Date of publication of application: **01.08.2001**
(21) Application number: 01300713.3
(22) Date of filing: 26.01.2001
(51) Int. Cl.: B62M 3/00

(54) **Integrated crank assembly and components therefor**

(30) Priority: 26.01.2000 US 178229 P
(71) Applicant: Cannondale Corporation, Bethel, CT 06801 (US)
(72) Inventor: Dodman, Christopher P., Danbury, CT 06810 (US)
(74) Representative: Shanks, Andrew

(57) **Abstract**

The present invention is directed to an integrated crank assembly. Preferably, the integrated crank assembly includes a bottom bracket spindle having an outside diameter of greater than 29 mm, a wall thickness of less than about 2 mm, and a wall thickness to outside diameter ratio of greater than about 11. In one embodiment, the assembly further includes a bottom bracket shell for receiving the spindle and bearing for rotatably supporting the spindle in the shell, where the bearings are mounted directly to the shell. Additionally, preferably the integrated crank assembly features crank arms with an optimized arch roof design. The crank arm includes two crank arm halves that are bonded together. In one embodiment, the wall thickness in each crank arm half varies continually along the length of the crank arm half. The wall thickness is optimized to carry the loads equally along the crank arm. Also, there may be total wall asymmetry throughout the crank arm. Thus, if the outside profile of the crank arm is asymmetric between halves, then the wall thickness can also be asymmetric because it is optimized for carrying loads equally along the length of the crank arm.

## Description

The present invention is directed to bicycles. More particularly, the present invention is directed to bicycle crank assemblies. Still more particularly, the present invention is directed to an integrated crank assembly and components therefor for a bicycle.

### BACKGROUND OF THE INVENTION

Conventionally, crank assemblies have featured crank axles or bottom bracket spindles having ends shaped into square columns. Square holes in the crank arms are used to fasten the crank arms onto the crank axle.

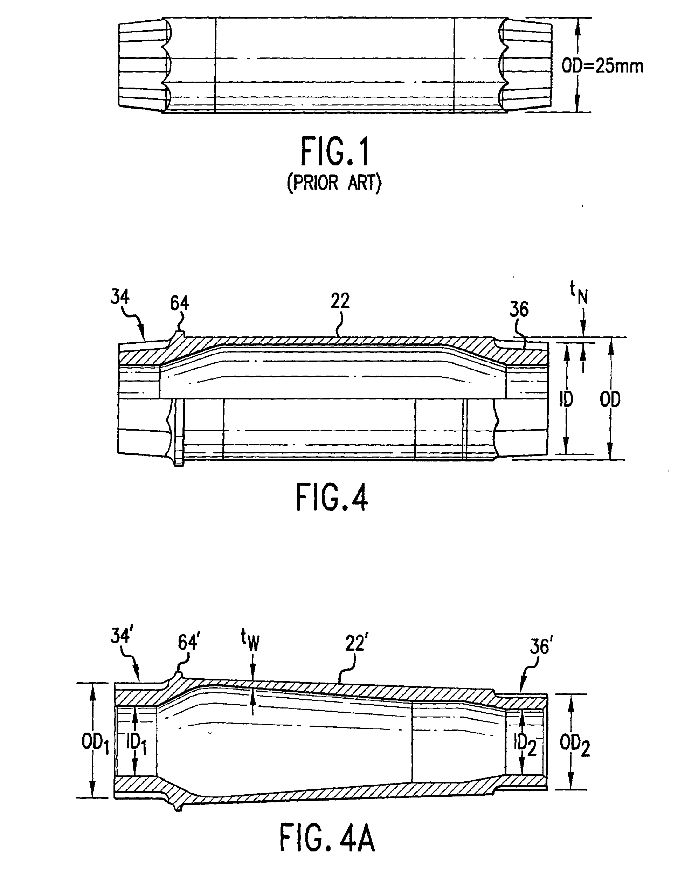

One prior art crank axle is shown in Figure 1. This is a crank axle design that has been used since at least 1993 for Cannondale's 900 crank assembly. The production version of this crank axle features a hollow center, with a maximum outside diameter of about 25 mm, and an inside diameter of about 13 mm. The ends of the axle taper slightly, and are threaded for attachment of the crank arms. This crank axle is aluminum and has a mass of about 92 grams.

U.S. Patent No. 5,845,543 to Yamanaka is entitled a Bicycle Crank Arm Parts/Assembly and Assembly Tools. This patent discloses a crank axle body having first and second ends, with a first and second rotary linkage member disposed at the first and second ends. The rotary linkage member is preferably a plurality of splines and the axle is preferably hollow. The crank arms feature a crank axle mounting section with a centering structure for centering the crank arm onto the crank axle. Additional rotary linkage members on the crank arms non-rotatably secure the crank arms to the crank axle. The commercial embodiment of this patent, the Shimano XTR, has an crank axle with an outside diameter of 22 mm.

Crank axles are housed in a bottom bracket shell. The standard size bottom bracket shell in order to accommodate a spindle with a maximum outer diameter of 25 mm must locate the bearings outside of the shell in separate adapter cups. These additional adapter cups add weight to the crank assembly, which is undesirable.

Such an arrangement is shown in U.S. Patent No. 5,924,336 to Richardson entitled a Hollow Bicycle Crankshaft. This patent discloses a hollow bicycle crankshaft that includes a hollow shaft assembly formed of two separate shaft members fastened together. The crankshaft further includes a tubular housing member with two housing member ends for supporting two shaft bearings at either end of the housing member exterior thereto. The shaft bearings allow the shaft members to rotate within the stationary housing.

Alternatively, larger diameter bottom bracket shells can be used to accommodate oversized axles (i.e., those with an outer diameter of about 25 mm). The oversized axles are desirable because they provide additional stiffness and/or strength, however, their mass is typically over 100 grams, which is undesirable for riders who want lightweight bikes.

It is desirable to provide an integrated crank assembly that can accommodate an oversized crank axle and be lightweight, with adequate stiffness (i.e., resistance to torsional and bending deflection), and adequate strength.

### SUMMARY OF THE INVENTION

The present invention is directed to a bicycle integrated crank assembly. The integrated crank assembly comprises a bottom bracket shell having a width, a bottom bracket spindle with first and second ends, and a pair of bearings. The bottom bracket spindle fits within the bottom bracket shell. The first bearing is mounted on the first end of the bottom bracket spindle, and the second bearing mounted on the second end of the bottom bracket spindle. Both bearings are mounted directly to the shell and are within the width of the shell. The assembly further includes a pair of hollow crank assemblies attached to the ends of the bottom bracket spindle.

In one embodiment, the spindle is formed of low specific gravity material, such as an aluminum alloy.

In another embodiment, at least one of the crank assemblies is formed integrally with the bottom bracket spindle. In another embodiment, both crank assemblies are formed integrally with a portion of the bottom bracket spindle.

The present invention is also directed to an integrated crank assembly comprising a bottom bracket shell, a bottom bracket spindle, two crank assemblies, a bearing associated with at least one crank assembly, a bearing shield, and a spring element. The spring element is located between the crank assembly and the bearing shield to preload the bearing. The preloading component (i.e., the spring element) is preferably located adjacent the right-hand crank assembly.

The present invention is also directed to an oversized bottom bracket spindle. The outside diameter of the bottom bracket spindle is preferably greater than about 29 mm. The outside diameter along with an inside diameter define a wall thickness. Preferably the wall thickness is less than 2 mm. Preferably, a ratio of the wall thickness to the outside diameter of the spindle is greater than about 11. The bottom bracket spindle can be made out of various materials including steel, aluminum, carbon fiber, magnesium, titanium, or blends thereof. Thus, even though a larger outside diameter is used, the bottom bracket spindle of the present invention is lighter than its predecessors. Because of this, the total weight of the crank assembly is decreased.

In addition, the present invention it is directed to a crank arm. The crank arm assembly is hollow and preferably made of two halves that are then bonded together to form the crank arm assembly. Two such crank arm assemblies have a bottom bracket spindle end and a pedal end. Preferably, the wall thickness varies continually along the length of each crank arm half. Preferably, the thickness also varies along the width of the crank arm halves. The wall thickness varies because it has been optimized to carry the loads equally along the crank arm. Preferably, the crank arm assembly outer diameter increases and wall thickness is thinner toward the bottom bracket spindle end. Also, there may be total wall asymmetry throughout the crank arm assembly. Thus, if the outside profile of the crank arm assembly is asymmetric between halves, then the wall thickness can also be asymmetric because it is optimized for carrying loads equally along the length of the crank arm assembly. The total thickness or outer diameter of the crank arm assembly also varies.

In one embodiment, a passageway is formed disposed adjacent a hollow portion of the crank arm assembly. The passageway can be formed by a vent tube, a port, a hole, or the like. In a preferred embodiment, the passageway is also adjacent a pedal mounting hole so that there is fluid communication between the hollow portion and the mounting hole. The passageway allows any gases to escape from the hollow portion inside of the crank arm assembly while the adhesive is cured at an elevated temperature. The passageway can be parallel or angularly offset from an upper surface of one of the crank arm halves.

### BRIEF DESCRIPTION OF THE DRAWINGS

FIG. 1 is an elevational view of a prior art bottom bracket spindle or crank axle;
FIG. 2 is a partial, cross-sectional, elevational view of an integrated crank assembly according to the present invention;
FIG. 3 is an exploded, perspective view of an integrated crank assembly according to the present invention;
FIG. 4 is a partial cross-sectional view of an embodiment of a bottom bracket spindle according to the present invention;
FIG. 4A is an enlarged cross-sectional view of another embodiment of a bottom bracket spindle according to the present invention;
FIG. 5 is a side view of an embodiment of a crank arm according to the present invention;
FIG. 6 is a cross-sectional view of the crank arm along line 6-6 of FIG. 5;
FIG. 6A is a cross-sectional view of another embodiment of the crank arm according to the present invention;
FIG. 6B is a an enlarged, partial, cross-sectional view of another embodiment of the crank arm according to the present invention;
FIG. 7 is a partial, perspective end view taken along line 7-7 in FIG. 6;
FIG. 8 is a partial, perspective end view taken along line 8-8 in FIG. 6;
FIG. 9 is an exploded, top, perspective view of the two halves of the crank arm according to the present invention;
FIG. 10 is an exploded, bottom, perspective view of the two halves of the crank arm according to the present invention;
FIG. 11 is an exploded, cross-sectional view of crank arm integrally formed with the bottom bracket spindle and another crank arm disassembled therefrom; and
FIG. 12 is a partial, cross-sectional view of a pair of crank arms integrally formed with portions of the bottom bracket spindle.

### DETAILED DESCRIPTION OF THE PREFERRED EMBODIMENT

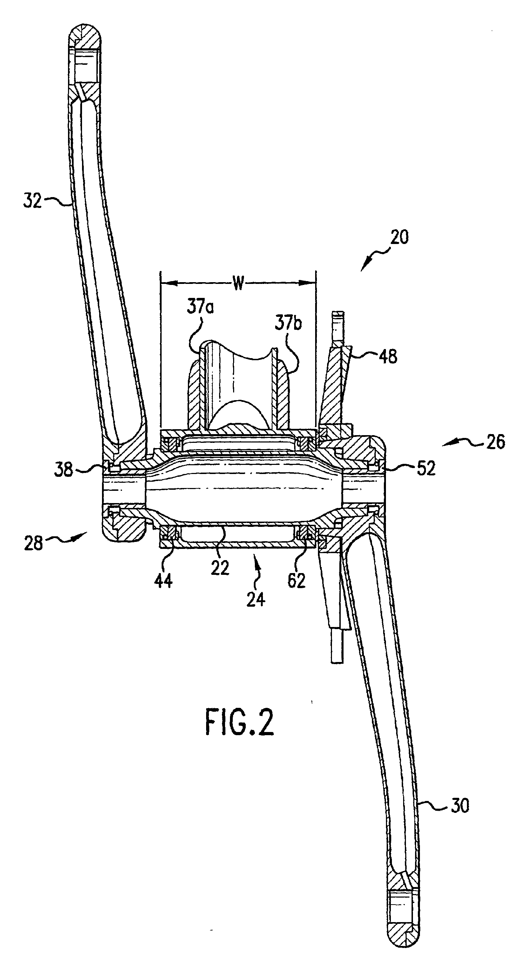

Referring to Fig. 2, a cross section of an integrated crank assembly 20 according to the present invention is shown. A bottom bracket spindle 22 is rotatably located within a bottom bracket shell 24. A right-hand crank assembly 26 and a left-hand crank assembly 28 are attached to the bottom bracket spindle 22 on their respective sides, such that the movement of the crank arm assemblies 30 and 32 will rotate the bottom bracket spindle 22 within the bottom bracket shell 24.

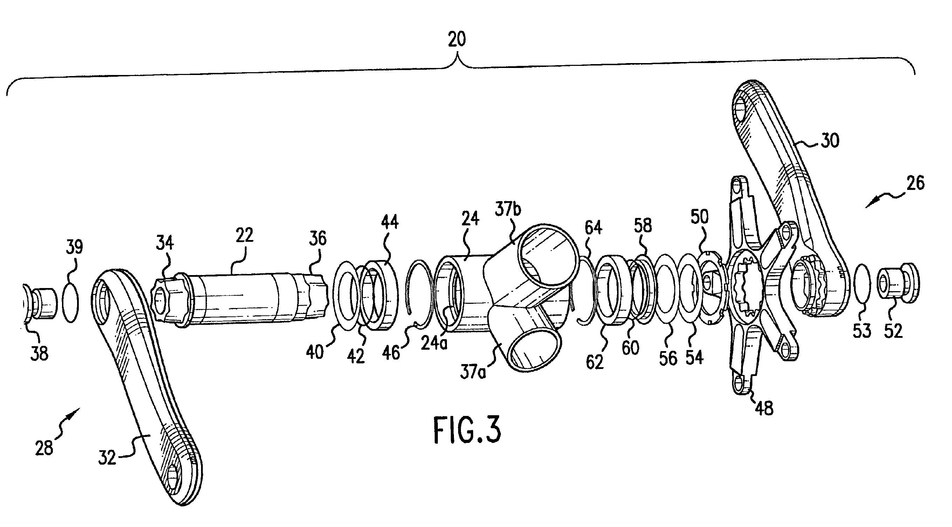

Fig. 3 shows an exploded view of the preferred embodiment of the integrated crank assembly 20. The bottom bracket spindle 22 includes a first end 34 and a second end 36. The bottom bracket spindle is rotatably located within the bottom bracket shell 24. The bottom bracket shell 24 has a down tube 37a and a seat tube 37b coupled thereto by welding. These tubes 37a, b are parts of a conventional "diamond" type frame. Additional tubes can be connected to the bottom bracket shell 24 or integrally formed therewith to form the frame, as known by those of ordinary skill in the art.

The left-hand crank assembly 28 comprises a left crank arm assembly 32. A first crank bolt 38 attaches the left crank arm assembly 32 onto the first end 34 of the bottom bracket spindle. A thin steel washer 39 is disposed on the bolt 38 between the bolt's head and the crank arm assembly 32. Also loaded or mounted onto the bottom bracket spindle are a first bearing shield 40, a first seal 42, a first bearing 44 and a first "C" clip 46. The clip 46 is installed in a groove, such as groove 24a in the shell 24.

The right-hand crank assembly 26 comprises a right crank arm assembly 30, a spider 48, and a lockring 50. The spider 48 is a sproket bracket for mounting a chain and sproket assembly (not shown) thereon. A second crank bolt 52 attaches the right-hand crank arm assembly 26 onto the second end 36 of the bottom bracket spindle 22. A thin steel washer 53 is disposed on the bolt 52 between the bolt's head and the crank arm assembly 30. Also loaded or mounted onto the bottom bracket spindle 22 are at least one shim 54, a wave washer 56, a second bearing shield 58, a second seal 60, a second bearing 62 and a second "C" clip 64. Clip 64 is installed in a groove like groove 24a in the shell 24.

The wave washer 56 is a type of spring element, and the present invention is not limited to this type of spring element. Preferably the spring element is formed of sheet metal. Other recommended spring elements are Belleville washers, finger washers, curved spring washers, O-rings, and coil compression springs. The compression springs may be conical. The present invention is not limited to these types of spring elements and others that provide the preload function can also be used. The first and second seals 42 and 60 are optional. The placement of the wave washer 56 and shims 54 between the right crank arm assembly 30 or the lockring 50 and the bearing shield 58 preloads the bearings 44 and 62. The placement of these elements also lessens, and possibly eliminates, axial movement of the crank assembly within the bicycle frame while allowing for tolerance stack up in the assembly. Preferably, the shims are thin and non-metallic. In addition, preferably more than one shim is used. Most preferably three to four shims are used.

In this embodiment, the bearings are single-row deep groove ball 600 series bearings with two seals also commercially available, used in high performance bottom bracket design, and known by industry bearing code 61806-2RS . Alternatively, the bearings could be double-row deep groove ball bearings, angular contact ball bearings, roller or needle bearings, taper roller bearings, four-point contact ball bearings, or combinations of these bearings.

As shown in Fig. 2, the bottom bracket spindle bearings 44 and 62 are housed within a width, designated w, of the bottom bracket shell 24. As shown, the bottom bracket bearings 44 and 62 are mounted directly into the bottom bracket shell 24 such that the bearings 44 and 62 contact an inner surface of the bottom bracket shell 24.

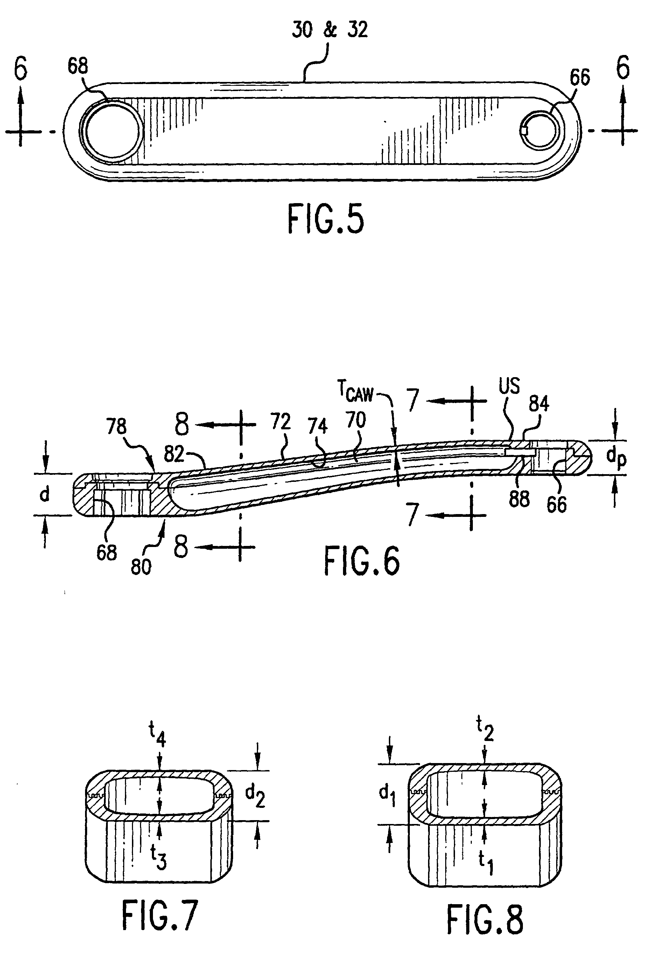

The bottom bracket spindle 22 is shown in Fig. 4. The bottom bracket spindle is hollow. The bottom bracket spindle has an outside diameter OD and an inside diameter ID. Both the outside and inside diameter taper at the first and second ends 34 and 36 of the bottom bracket spindle. However, the rate at which they taper may be varied, and they may taper differently at each end as shown. Preferably, at the first end 34 the inside taper is steeper than at the second end 36. The outside diameter OD and the inside diameter ID define a wall thickness t_{w}. Preferably, the outside of the bottom bracket spindle toward the first end 34 features a flange 64. Referring to Figs. 3 and 4, the first bearing shield 40, first seal 42, first bearing 44, and first "C" clip 46 are located adjacent the flange 64.

Referring again to Fig. 4, the outside diameter of the bottom bracket spindle is greater than about 25.4 mm. More preferably, the outside diameter of the bottom bracket spindle is 29.90 mm or about 30 mm. Preferably, the wall thickness t_{w} is less than 2 mm. More preferably, the wall thickness t_{w} is less than 1.75 mm. Most preferably, the wall thickness t_{w} is about 1.55 mm for road bikes and 2.0 mm for mountain bikes.

Preferably, a ratio of the wall thickness t_{w} to the outside diameter OD of the spindle is greater than 11. More preferably, this ratio is greater than 15. Most preferably, it is about 20. For road bikes, preferably the bottom bracket spindle has an outside diameter OD of 29.9 mm, a wall thickness t_{w} of about 1.55 mm, a wall thickness to outside diameter ratio of about 19.3 and is made of aluminum. For mountain bikes, preferably the bottom bracket spindle has an outside diameter OD of 29.9 mm, a wall thickness t_{w} of about 2.0 mm, a wall thickness to outside diameter ratio of about 14.95 and is made of aluminum.

The bottom bracket spindle may be formed of a variety of materials including steel, aluminum, carbon fibre, magnesium, titanium or any other suitable materials. The specific gravities of these materials are 7.8, 2.7, 1.5, 1.8, and 4.5, respectively. Thus, preferably, the spindle is made of materials with a specific gravity of less than 8, most preferably the spindle is made of materials with a specific gravity of less than 5.

The spindle for mountain bikes is typically longer than that used for road bikes due to the wider rear tire on mountain bikes. For an aluminum mountain bike spindle of the inventive design with a length of 122 mm, the mass is 81 grams. For an aluminum road bike spindle of the inventive design with a length of 104 mm, the mass is 61 grams. Preferably, the spindles with an outer diameter of 29.9 mm have a mass less than 85 grams. The increased diameter for good stiffness and strength results in a weight savings unlike prior art spindles. Additional, weight savings may be realized with for example a titanium spindle however the stiffness may decrease.

The following table shows data for various comparative examples of spindles and the ratio of wall thickness to outer diameter for the spindles.

**TABLE 1**

| DATA FOR VARIOUS SPINDLES | | | |
|---|---|---|---|
| **Spindle Description** | **Wall Thickness (mm) *±* 10%** | **Spindle Outer Diameter (mm) ± 0.5 mm** | **Ratio of Wall Thickness to Outer Diameter** |
| Klein™ Model | 5 | 17 | 3.5 |
| Bullseye™ Cranks by Durham | 2 | 22 | 10.6 |
| Shimano® XTR/Dura-ace | 1.25 | 19.5 | 17.6 |

All of the above spindles are steel. Since the first two spindles have ratios lower than 11, they do not meet the preferred ratio of the present invention, as discussed above. Since the last spindle has ratios lower than 20, it does not meet the most preferred ratio of the present invention, as discussed above.

An alternative embodiment of a bottom bracket spindle 22' is shown in Fig. 4A. The bottom bracket spindle 22' is hollow. The bottom bracket spindle 22' has a first outside diameter OD₁, and a first inside diameter ID₁ at first end 34'. The bottom bracket spindle 22' has a second outside diameter OD₂ and a second inside diameter ID₂ at second end 36'. The first outside diameter OD₁ is greater than the second outside diameter OD₂ so that the outer surface of spindle 22' tapers from the first end 34' to the second end 36'. The first inside diameter ID₁ is greater than the second inside diameter ID₂ so that the inner surface of spindle 22' tapers from the first end 34' to the second end 36'. Spindle 22' further includes a flange 64' similar to flange 64, as previously described.

Spindle 22' can be incorporated into a crank assembly similar to that shown in Figs. 2 and 3. This spindle can be used with two different diameter bearings at either end. The wall thickness t_{w} of the spindle 22' can be varied along the length of the spindle to keep the stiffness constant and distribute stress evenly. Preferably, the first outside diameter OD₁ is greater than 26 mm. The first outside diameter OD₁ can be about 30 mm.

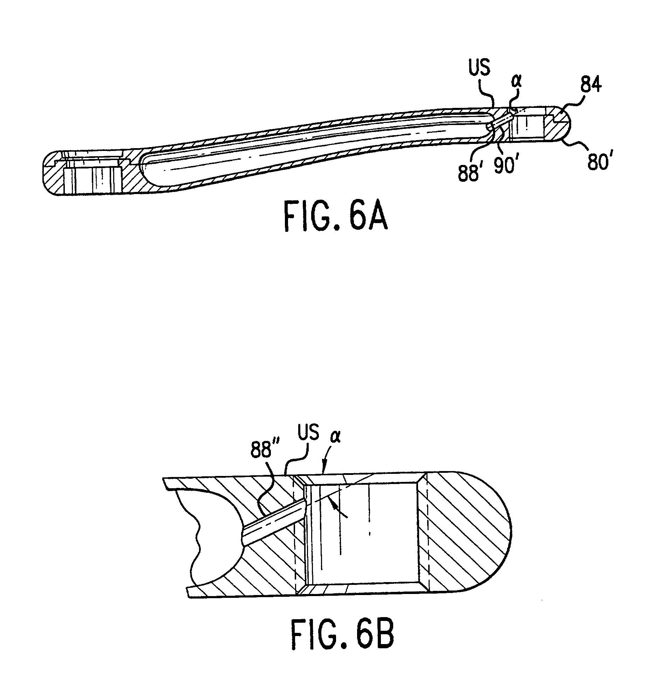

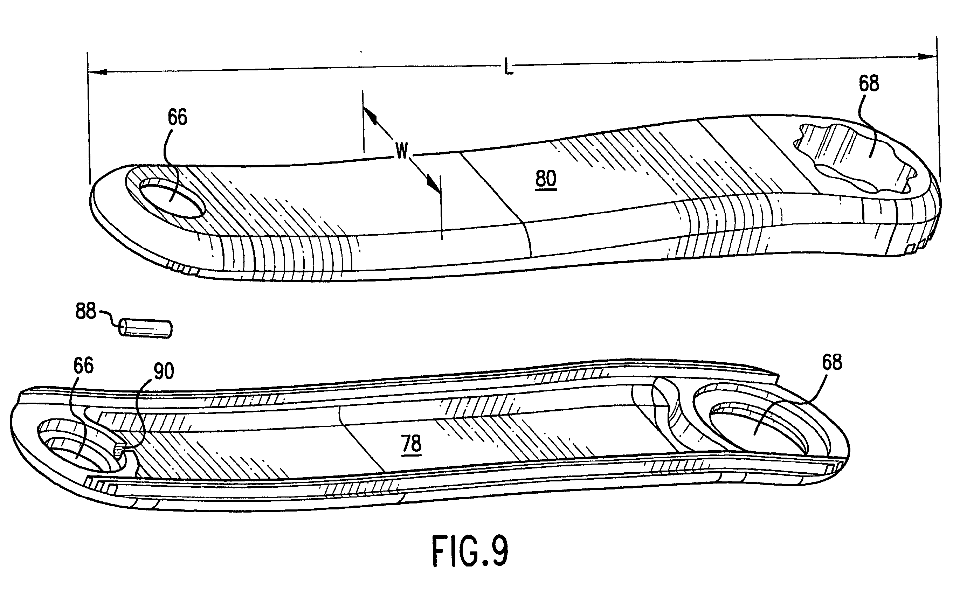

Fig. 5 is a side view of crank arm assemblies 30 and 32 according to the present invention. The crank arm assemblies features a pedal mounting hole 66 and a bottom bracket spindle mounting hole 68. Referring to Fig. 6, each crank arm assembly has a hollow portion or chamber 70 and features outside and inside wall surfaces 72 and 74, respectively, defining a varying wall thickness t_{caw} to provide an optimized arch roof design. The crank arm wall thickness t_{caw} is optimized to carry the loads equally along the crank arm. Each crank arm assembly is formed of two crank arm halves 78 and 80 (as best seen in Fig. 9) that are mated together to form the crank arm. Preferably, the crank arm total cross section increases and the wall thickness t_{caw} is thinner at a bottom bracket spindle end 82 towards the bottom bracket spindle mounting hole 68, than at a pedal end 84 towards the pedal mounting hole 66. Preferably, the wall thickness varies along length L of each crank arm half 78 and 80. Preferably, the wall thickness also varies along the width w of each crank arm half. Although the wall thickness t_{caw} is thinner towards the bottom bracket spindle end 82, the total crank thickness d is actually larger at the bottom bracket spindle end 82 than the total crank thickness dₚ at the pedal end 84. Preferably, the bottom bracket spindle end 82 and pedal end 84 are not aligned, such that the crank arm 30 and 32 features a slight curve to connect the ends 82 and 84 of the crank arm assembly.

Referring to Figs. 7 and 8, the cross section of the crank arm assembly is shown as taken at lines 7-7 and 8-8 on Fig. 6. Preferably, as shown on Fig. 6, the crank arm assembly wall thickness t_{caw} varies along the length of each crank arm half 78, 80 depending on the configuration and dimensions of the inside and outside wall surfaces of the crank arm assembly. Preferably, the thickness also varies continually along the cross section of the crank arm halves. Preferably, the wall thickness is optimum if it is symmetric between crank arm halves. Referring to Fig. 7, t₃ and t₄ are about 1.4 mm. Referring to Fig. 8, t₁ and t₂ are about 1.2 mm. In Fig. 7, the thickness of the crank arm assembly is d₂. In Fig. 8, the thickness of the crank arm assembly is d₁. Preferably, d₁ is greater than d₂.

It is possible to have the outside wall surface of the crank arm assembly asymmetric between the crank arm halves. The inside wall surface of the crank arm halves could then also be asymmetric through out the crank arm assembly in order to provide a varied wall thickness. In this manner, the wall thickness could be optimized to carry loads equally along the crank arm assembly.

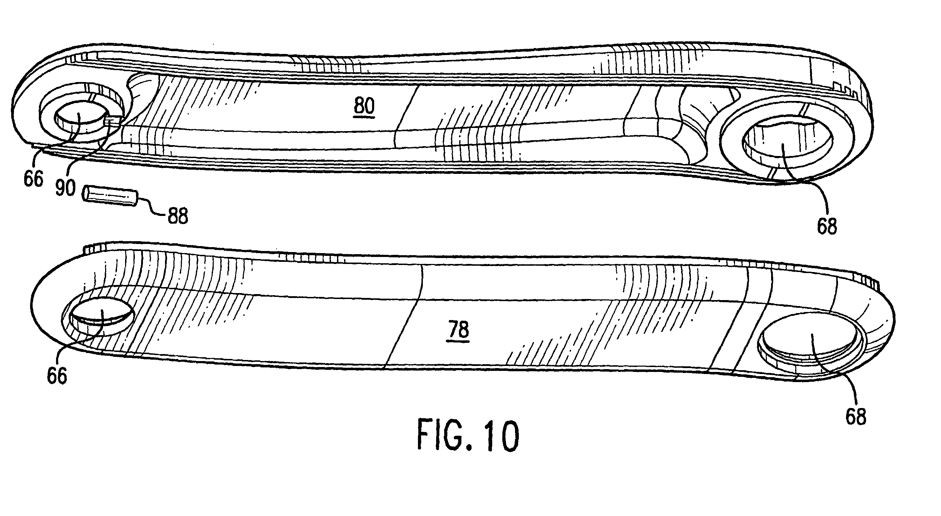

Now referring to Figs. 9 and 10, the first and second crank arm halves 78 and 80 are shown. The crank arm halves are assembled together preferably by bonding. In one embodiment for assembling the crank arm, a vent tube 88 is bonded between the first and second crank arm halves. Preferably, as shown, the vent tube is located in a concave hollow 90 providing a passageway between the hollow portion 70 (as shown in Fig. 6) of the crank arm assembly and the pedal mounting hole 66. Alternatively, the hollow and passageway can be formed such that fluid communication exists between the hollow portion 70 and the bottom bracket spindle mounting hole 68.

Referring to Figs. 6 and 9, in the crank arm half 80 the hollow 90 is formed so the tube 88 upon insertion is substantially parallel to a upper surface US of the crank arm half 84 defining a substantially horizontal plane.

Referring to Fig. 6A, in the crank arm 80' the hollow 90' is formed so that the tube 88' upon insertion is angularly offset from the upper surface US of crank arm half 84 defining a substantially horizontal plane, by an angle α. Preferably, the angle α is between about 20° and about 30°, more preferably the angle α is about 25°. Although, the present drawings shown the crank arm assembly with a vent tube, a port or hole 88" (as shown in Fig. 6B) can also be used without the tube to provide the necessary passageway.

Referring to Figs. 9 and 10, after the tube 88 is located between the crank arm halves 78 and 80, the crank arm halves are then bonded together. Preferably, bonding between the crank arm halves is achieved using an adhesive. While the adhesive is cured at an elevated temperature, gases are allowed to escape from the hollow portion of the crank through the vent tube. After curing, the vent tube is machined away when the pedal threads are machined. The pedal threads are then plugged prior to plating to stop the plating solution from entering the hollow portion of the crank arm. The vent tube, port, or hole may include threads for receiving a set screw as a plug to prevent fluid communication with the hollow portion. The set screw can be formed of materials such as plastic. The use of the vent tube is a beneficial process to use as it is simple for manufacturing purposes and is also completely concealed during use.

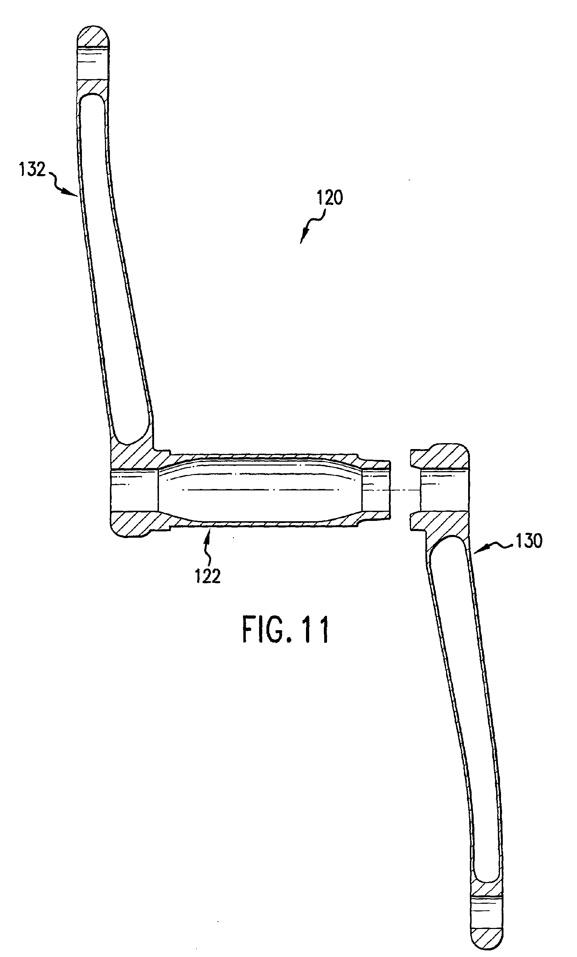

Referring to Fig. 11, an alternative integrated crank assembly 120 is shown. The integrated crank assembly 120 includes a crank arm assembly 132 that is integrally formed with spindle 122. These components can be integrally formed. The crank arm assembly 130 is separate from the spindle 122 and is coupled thereto as discussed above with respect to the crank assembly of Fig. 2. In addition, any other conventional connection can be used t couple the crank arm assembly 130 to the spindle 122. In this embodiment, the crank arm assemblies 130 and 132 are hollow crank arms formed as a single piece. In another embodiment, however, the crank arm assemblies 130 and 132 can be formed of two crank arm halves, as discussed above. Alternatively, both crank arms 132 and 130 can be formed integrally with the spindle.

Forming the crank arm assembly 132 integrally with spindle 122 can be done using a combination of manufacturing processes including some of the following methods: welding, bonding, investment casting, three-dimensional forging, forging, forming, and machining. These components can also be formed using various composite manufacturing techniques and materials, such as bladder molded carbon fiber, as well as other methods of manufacturing hollow composite components known to those of ordinary skill in the art. Integrally formed can mean that the parts several pieces joined in a permanent manner, such as by welding, bonding, or the like, or that the parts are formed as a single piece.

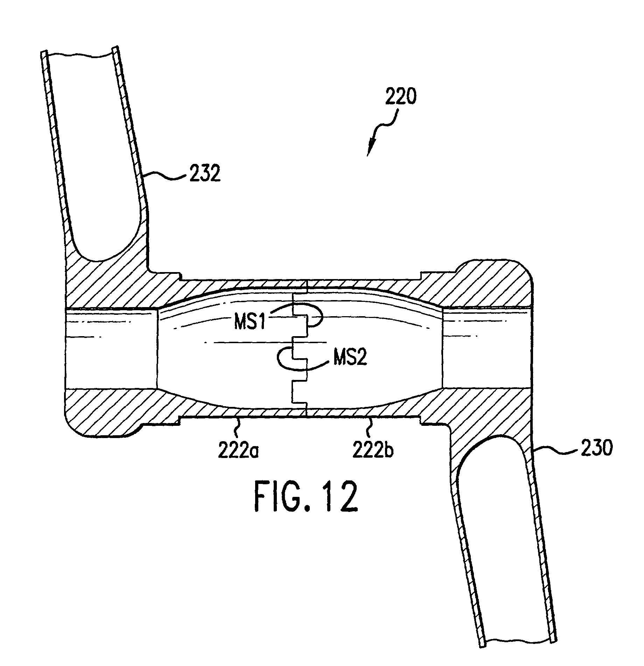

Referring to Fig. 12, an alternative integrated crank assembly 220 is shown. The integrated crank assembly 220 includes a crank arm assembly 232 that is integrally formed with spindle portion 222a. These components can be integrally formed by the methods discussed above with respect to Fig. 11. The spindle portion 222a includes mating surface MS1. The integrated crank assembly 220 further includes a crank arm assembly 230 that is integrally formed with spindle portion 222b. The spindle portion 222b includes mating surface MS2. The spindle portions 222a, 222b are coupled at the mating surfaces MS and MS2 by a double threaded tubular fastener located within the portions 222a and 222b incorporating left-hand and right-hand threads on opposite ends of the outside diameter and a spindled inside diameter for tightening with a tool. In this embodiment, the crank arm assemblies 230 and 232 are hollow crank arms formed as a single piece. In another embodiment, however, the crank arm assemblies 230 and 232 can be formed of two crank arm halves, as discussed above. The spindle portions 222a and 222b can be symmetrical or asymmetrical. The asymmetry can be exhibited in various characteristics of the portions 222a and 222b being different, such as the following: the length of the portions, the inner and/or outer diameter of the portions, the wall thickness of the portions, the taper rate of the portions and the material of the portions.

While it is apparent that the illustrative embodiments of the invention herein disclosed fulfills the objectives stated above, it will be appreciated that numerous modifications and other embodiments may be devised by those skilled in the art. For example, the present invention could use the bottom bracket spindle with a crank arm assembly having different crank arms than those shown and described. Thus, any crank arm assembly known could be used with the bottom bracket spindle. In one embodiment, the integrated crank assembly can be used with a removable cartridge bearing assembly that includes, referring to Fig.3, a sealed cartridge including the bottom bracket spindle 22, bearings 40 and 62, C-clips 46 and 64, shields 40 and 50, and shell 24. Additional elements such as the seals 42 and 60 can also be apart of the cartridge. Such a cartridge would weigh about 120 grams compared to a conventional cartridge with adapter cups for holding the bearings outside of the shell that weights about 240 grams. The cartridge can also be formed with various combinations of these components. Using this cartridge, lubricant is sealed into the cartridge and changing an old cartridge for a new one is easy. The assemblies shown above can include more bearings than shown above. The features of one embodiment can be used with the features of another embodiment. Therefore, it will be understood that the appended claims are intended to cover all such modifications and embodiments which come within the spirit and scope of the present invention.

## Claims

1. The integrated crank assembly comprising:
a bottom bracket shell including a width;
a bottom bracket spindle having a first and second end, with the bottom bracket spindle fitting within the bottom bracket shell;
a first bearing mounted on the first end of the bottom bracket spindle directly into the bottom bracket shell;
a second bearing mounted on the second end of the bottom bracket spindle directly into the bottom bracket shell; and
a pair of hollow crank arm assemblies coupled to each end of the bottom bracket spindle,
wherein the first and second bearings are within the width of the shell, wherein the bearings are.

2. The integrated crank assembly of claim 1, wherein the spindle is formed of an aluminum alloy.

3. The integrated crank assembly of claim 2, wherein at least one of the crank assemblies is formed integrally with the bottom bracket spindle.

4. The integrated crank assembly of claim 3, wherein both crank assemblies are formed integrally with a portion of the bottom bracket spindle.

5. The integrated crank assembly of claim 1, wherein the bottom bracket spindle is hollow and has an outside diameter equal to or greater than about 29 mm.

6. The integrated crank assembly of claim 1, wherein the bottom bracket spindle, bearings and shell form a cartridge for use with a bicycle frame and removable therefrom as a unit.

7. A integrated crank assembly comprising:
a bottom bracket shell;
a bottom bracket spindle having a first and second end, with the bottom bracket spindle fitting within the bottom bracket shell;
a first crank assembly attached to the first end of the bottom bracket spindle;
a second crank assembly attached to the second end of the bottom bracket spindle and having at least one bearing and at least one bearing shield; and
a spring element is located between the second crank assembly and the bearing shield to preload the bearing.

8. The integrated crank assembly of claim 7, wherein the second crank assembly is a right-hand crank assembly.

9. The integrated crank assembly of claim 8, wherein:
the second crank assembly and the first crank assembly each has a crank arm formed of first and second crank arm halves each having a wall thickness and being mated to form a hollow portion there between and the crank arm having a width;
wherein the wall thickness of each crank arm half varies along the width of the crank arm.

10. The integrated crank assembly of claim 7, wherein the spring element is formed of sheet metal.

11. The integrated crank assembly of claim 7, further including at least one shim located between the second crank assembly and the bearing shield to preload the bearing.

12. A bottom bracket spindle comprising:
a hollow bottom bracket spindle having an outside diameter, wherein the outside diameter is equal to or greater than about 29 mm.

13. The bottom bracket spindle of claim 12, wherein the outside diameter of the bottom bracket spindle is about 30 mm.

14. The bottom bracket spindle of claim 13, further including an inside diameter, and the outside diameter and the inside diameter define a wall thickness, wherein a ratio of the wall thickness to the outside diameter is greater than 11.

15. The bottom bracket spindle of claim 13, wherein the ratio of the wall thickness to the outside diameter is about 20.

16. The bottom bracket spindle of claim 12, wherein the spindle has a mass less than 100g.

17. The bottom bracket spindle of claim 12, wherein the spindle is a single piece.

18. The bottom bracket spindle of claim 13, wherein the spindle outer and inside diameters taper.

19. The bottom bracket spindle of claim 13, wherein the wall thickness tapers from between two ends.

20. A crank arm assembly comprising:
a first and second crank arm half that are mated to form a hollow portion there between having a length; and
a wall thickness along each crank arm half;
wherein the wall thickness of each crank arm half varies along the length of the crank arm.

21. The crank arm assembly of claim 20, wherein the wall thickness is optimized to carry loads equally along the crank arm assembly.

22. The crank arm assembly of claim 20, wherein the first and second crank arm halves have a width, and the wall thickness varies along the width.

23. The crank arm assembly of claim 20, further including:
a profile of the crank arm assembly;
wherein the profile of the crank arm assembly is asymmetric between crank arm halves, and the wall thickness is asymmetric between the crank arm halves.

24. A crank arm assembly comprising:
a first crank arm half;
a second crank arm half mated to the first crank arm half to form a hollow portion there between; and
a passageway is disposed between the first and second crank arm halves for fluid communication from the hollow portion.

25. The crank arm assembly of claim 24, wherein the passageway is selected from the group including a port, a hole or a vent tube.

26. The crank arm assembly of claim 24, wherein the a passageway extends between the hollow portion and a pedal mounting hole.

27. The crank arm assembly of claim 24, wherein the passageway is inclined with respect to an upper surface of one of the crank arm halves.
